# EUROPÄISCHE PATENTSCHRIFT

(11) **EP 3 858 957 B1**
(45) Veröffentlichungstag und Bekanntmachung des Hinweises auf die Patenterteilung: **08.06.2022**
(21) Anmeldenummer: 20205905.1
(22) Anmeldetag: 05.11.2020
(51) Int. Cl.: C10M 169/06, C10M 177/00, F16C 33/44, C23C 14/06, B05D 5/08, F16C 17/00, F16C 19/00, F16C 33/66, C10N 10/02, C10N 10/04, C10N 10/08, C10N 10/12, C10N 20/00, C10N 20/06, C10N 40/02, C10N 50/02, C10N 50/00, C10N 50/10, C10N 70/00

(54) **TRIBOLOGISCHES SYSTEM**
TRIBOLOGICAL SYSTEM
SYSTÈME TRIBOLOGIQUE

(30) Priorität: 03.02.2020 DE 102020102635
(43) Veröffentlichungstag der Anmeldung: 04.08.2021
(73) Patentinhaber: Klüber Lubrication München SE & Co. KG, 81379 München (DE)
(72) Erfinder: Staub, Philipp, 81379 München (DE); Glotz, Reinhold, 81547 München (DE); Thamerus, Heike, 81477 München (DE); Seemeyer, Stefan, Dr., 82515 Wolfratshausen (DE); Loderer, Dirk, Dr., 82205 Gilching (DE)
(74) Vertreter: Kuhn, Daniela

(56) Entgegenhaltungen:
- WO-A1-2013/137399
- DE-A1- 19 729 562
- WINKLER H: "SCHMIERUNG POLYMERER WERKSTOFFE TEIL II: ELASTOMERE", ANTRIEBSTECHNIK, VEREINIGTE FACHVERLAGE, MAINZ, DE, Bd. 39, Nr. 2, 1. Februar 2000 (2000-02-01), Seiten 46-48, 50, XP000899183, ISSN: 0722-8546

## Beschreibung

Die Erfindung betrifft ein tribologisches System umfassend eine Sandwichschmierung, die eine bindemittelhaltige Festschmierstoffschicht enthält sowie seine Herstellung und die Sandwichschmierung an sich. Die Erfindung betrifft ferner die Verwendung der Sandwichschmierung zum Schmieren von tribologischen Systemen enthaltend metallische und/oder nichtmetallische Werkstoffe.

Zur Schmierung von tribologischen Systemen, wie Wälz- und Gleitlagern, Getrieben, Ketten, Gleitführungen und Gelenken, werden in der Regel Schmieröle und -fette als Schmiermittel eingesetzt. Insbesondere in Anwendungen mit hohem Gleitanteil werden auch bindemittelhaltige Festschmierstoffschichten und Plasmaschichten eingesetzt. Vorteilhaft an Festschmierstoffschichten ist, dass sie auch bei stark belasteten Maschinenelementen eine zuverlässige und wartungsfreie Dauerschmierung ermöglichen. Nachteilig ist jedoch ihre grundsätzlich geringe Lebensdauer.

Bei der Schmierung mit Schmierölen oder -fetten haben tribologische Systeme speziell im Bereich geringer Geschwindigkeiten sowie bei niedrigen Temperaturen ihre Schwächen. Aber auch bei hohen Geschwindigkeiten kann durch das temporäre Verdrängen oder Abschleudern des viskosen Schmierstoffes aus dem Tribokontakt ein Zustand der Mangelschmierung eintreten, der zu höherer Reibung und Verschleiß führt. Dies ist insbesondere deshalb relevant, da bei neuen Anwendungen eine immer höhere Lebensdauer durch immer verschleißbeständigere Schichten erwartet wird.

Bindemittel enthaltende Festschmierstoffschichten werden in der WO 2018171931 (A1) beschrieben. Diese Druckschrift offenbart einen Graphenhaltigen Gleitlack umfassend:
(A) 12 bis 32 Gew.-% Bindemittel,
(B) 0,5 bis 5 Gew.-% Co-Bindemittel,
(C) 4 bis 10 Gew.-% Festschmierstoff,
(D) 0,5 bis 10 Gew.-% Graphen,
(E) 0,1 bis 2,0 Gew.-% Additive und Auffüllen auf 100 Gew.-% mit

Lösungsmittel. Die Verwendung von Graphen verbessert die Verschleißfestigkeit und das Reibungsverhalten des Trockenfilmschmiermittels. EP 0695884 (A1) beschreibt einen Käfig für ein fettgeschmiertes Wälzlager, wobei der Käfig mit einer Festschmierstoff enthaltenden Beschichtung zur Absenkung der Betriebstemperatur des Käfigs und/oder des Lagers beschichtet ist. Die Festschmierstoffbeschichtung enthält vorzugsweise ein Disulfid oder Diselenid eines Übergangsmetalls der Gruppe V oder VI. Das feste Schmiermittel kann in Kombination mit einem organischen Harz wie PTFE vorliegen.

In der Druckschrift wird die Zusammensetzung der verwendeten Fette nicht beschrieben.

WINKLER H: "SCHMIERUNG POLYMERER WERKSTOFFE TEIL II: ELASTOMERE", ANTRIEBSTECHNIK, VEREINIGTE FACHVERLAGE, MAINZ, DE, Vol. 39, No. 2, 1 February 2000 (2000-02-01), S. 46-48, 50, XP000899183, ISSN: 0722-8546 beschreibt eine Sandwichschmierung für Elastomere.

Die Aufgabe der vorliegenden Erfindung besteht darin, ein tribologisches System mit einer Schmierung bereitzustellen, die eine lange Lebensdauer mit einer hohen Schmierwirkung, einer hohen Reibungsreduzierung und Verschleißminderung insbesondere bei hohen Geschwindigkeiten kombiniert. Diese Aufgabe wird gelöst durch ein tribologisches System, umfassend einen Grundkörper sowie eine Sandwichschmierung, wobei die Sandwichschmierung
- eine bindemittelhaltige Festschmierstoffschicht umfassend einen Festschmierstoff aufweist sowie
- eine Schmiermittelschicht umfassend ein Schmiermittel und
wobei die bindemittelfhaltige Festschmierstoffschicht und die Schmiermittelschicht als separate Schichten auf dem Grundkörper vorliegen und wobei das Schmiermittel Lithiumseife enthält.

Überraschend wurde gefunden, dass mit der erfindungsgemäßen Kombination aus bindemittelhaltiger Festschmierstoffschicht und Lithiumseife enthaltender Schmiermittelschicht eine Sandwichschmierung mit signifikant verbesserter Schmierwirkung und insbesondere mit einem geringeren Verschleiß, als mit den jeweiligen Einzelkomponenten erhalten werden kann. Hierdurch kann die Lebensdauer von tribologischen Systemen signifikant erhöht werden.

Dieser Effekt war überraschend, da nicht zu erwarten war, dass die Kombination von bindemittelhaltigen Festschmierstoffschichten mit speziell Lithiumseifen enthaltenden Schmierstoffen die vorgenannten vorteilhaften Effekte ermöglicht, während andere Metallseifen enthaltende Schmiermittel nicht dazu führen.

Ohne sich auf einen Mechanismus festzulegen wird vermutet, dass Bestandteile des Lithiumseifen enthaltenden Schmiermittels durch Interaktion mit den Festschmierstoffen der bindemittelhaltigen Festschmierstoffschicht eine funktionale Grenzschicht auf der Oberfläche der bindemittelhaltigen Festschmierstoffschicht bilden, die die vorgenannten vorteilhaften Effekte ermöglicht.

Darüber hinaus bietet die erfindungsgemäße Kombination aus bindemittelhaltiger Festschmierstoffschicht und separater Schmiermittelschicht den Vorteil, dass der Festschmierstoff als Barriere zwischen Schmiermittel und der zu schmierenden Oberfläche fungieren und dabei Materialunverträglichkeiten und Werkstoffschädigungen durch das Schmiermittel, wie "White Etching Cracks" (WEC), reduzieren kann. Darüber hinaus kann durch die Barrierewirkung auch ein verbesserter Korrosions- und Verschleißschutz erzielt werden. Dies gilt insbesondere bei der Verwendung von Graphen als Festschmierstoff, da dieser eine besonders hohe Dichtigkeit aufweist. Mithin ist in einer bevorzugten Ausführungsform der Erfindung die Festschmierstoffschicht unmittelbar auf dem Grundkörper angeordnet. Ebenfalls bevorzugt ist die Schmiermittelschicht auf der dem Grundkörper abgewandten Seite der Festschmierstoffschicht angeordnet.

Der Begriff Lithiumseife wird in der im Schmierstoffbereich üblichen Weise verstanden. Insbesondere wird unter einer Lithiumseife erfindungsgemäß ein Reaktionsprodukt aus einer basischen Lithiumverbindung verstanden mit Carbonsäuren und/oder Carbonsäurederivaten, insbesondere ein Reaktionsprodukt aus Lithiumhydroxid mit einer oder mehreren organischen C₆ bis C₂₄ Mono- oder Dicarbonsäuren oder C₆ bis C₂₄ Mono- oder Dicarbonsäureestern und/oder mit deren Gemischen. Besonders bevorzugt ist die Lithiumseife ausgewählt aus Lithiumstearat und Lithium-12-hydroxystearat, Lithiumbehenat, Lithiummyristat, Lithiumpalmitat, Lithiumoleat, Lithiumlinoleat, Dilithiumsebacat, Dilithiumazelat, Dilithiumadipat und deren Gemischen. Ganz besonders bevorzugt sind Lithiumstearat und Lithium-12-hydroxystearat und deren Gemische. Im Falle einer Lithiumseife, die Lithiumsalze von Dicarbonsäuren enthält, enthält diese bevorzugt zusätzlich Lithiumsalze von einer oder mehreren Monocarbonsäuren. Erfindungsgemäß bevorzugt ist eine Lithiumeinfachseife, d.h. eine Lithiumseife, die keine Lithiumsalze von Di- oder höherfunktionellen Carbonsäuren aufweist.

In der Praxis enthält die Lithiumseife in der Regel ein Gemisch verschiedenartiger Lithiumseifen, d.h. ein Gemisch verschiedenartiger Reaktionsprodukte aus basischen Lithiumverbindungen mit Carbonsäuren und/oder Carbonsäurederivaten,da letztere zumeist aus natürlichen Quellen gewonnen werden. Deshalb enthält die Lithiumseife bevorzugt ein Gemisch verschiedener Lithiumseifen, in dem die als Hauptkomponente vorliegende Lithiumseife vorzugsweise einen Gewichtsanteil von mindestens 80 Gew.% aufweist.

In einer bevorzugten Ausführungsform beträgt der Gewichtsanteil an Lithiumseife 0,1 Gew.% bis 30 Gew.%, noch bevorzugter 5 bis 30 Gew.% und insbesondere 5 bis 25 Gew.%, bezogen auf das Gesamtgewicht des Schmiermittels.

Die Lithiumseife kann im Schmiermittel als Verdicker und/oder als Additiv fungieren. Fungiert die Lithiumseife als Verdicker, liegt das Schmiermittel als Schmierfett vor. Fungiert die Lithiumseife als Additiv, kann das Schmiermittel als Schmieröl vorliegen. Ebenfalls denkbar ist aber auch in diesem Fall, dass das Schmiermittel als Schmierfett vorliegt, wenn nämlich andere Verdicker enthalten sind.

In einer besonders bevorzugten Ausführungsform weist das Schmiermittel Glycerin und/oder ein Glycerinderivat auf. Bevorzugte Glycerinderivate sind erfindungsgemäß Mono-, Di- oder Triester aus Glycerin mit C₁₂ bis C₂₄ Carbonsäuren, vorzugsweise C₁₂ bis C₂₄ Monocarbonsäuren. Besonders bevorzugte Glycerinderivate sind Monoester.

Überraschend wurde gefunden, dass mit Glycerin und/oder einem Glycerinderivat als Komponente des Schmiermittels die Schmierwirkung, insbesondere das Reibungsverhalten der Sandwichschmierung bei hohen Gleitgeschwindigkeiten noch weiter verbessert werden kann. Hierdurch kann die Lebensdauer von tribologischen Systemen signifikant erhöht werden. Das Glycerin und/oder das Glycerinderivat kann als Basisölkomponente und/oder Additiv fungieren.

Der Anteil des Glycerins und/oder des Glycerinderivats liegt für Mono- oder Diester aus Glycerin mit C₁₂ bis C₂₄ Carbonsäuren bevorzugt im Bereich von 0,01 bis 5 Gew.%, besonders bevorzugt 0,1 bis 5 Gew.%, insbesondere 0,1 bis 2 Gew% bezogen auf das Gesamtgewicht des Schmiermittels. Für Triester aus Glycerin mit C₁₂ bis C₂₄ Carbonsäuren beträgt der Anteil im Schmiermittel bevorzugt 0,01 bis 90 Gew.%, bezogen auf das Gesamtgewicht des Schmiermittels.

Die Festschmierstoffschicht enthält erfindungsgemäß Bindemittel. Unter einem Bindemittel werden erfindungsgemäß Substanzen verstanden, die in der Festschmierstoffschicht enthaltene Festschmierstoffe, die üblicherweise in feinem Zerteilungsgrad vorliegen, zumindest teilweise zu umhüllen und miteinander und gegebenenfalls mit einem Substrat zu verbinden in der Lage sind. Vorteilhaft an der Verwendung eines Bindemittels ist, dass es eine besonders gute Anbindung des Festschmierstoffs an die zu schmierende Substratoberfläche ermöglicht. Die Bindemittel enthaltende Festschmierstoffschicht kann auch als Gleitlack angesehen werden. Als Gleitlacke werden Lacksysteme bezeichnet, wenn diese neben Bindemittel Festschmierstoffe oder schmieraktive Substanzen enthalten.

Bindemittel sind ausgewählt aus der Gruppe bestehend aus organischem Polymer, insbesondere Polyimid (PI), bevorzugt Polyamidimid (PAI), Polyurethan (PU), Epoxid, Phenolharz, Phenoxyharz, Melaminharz, Acrylatharz, Polyetheretherketon (PEEK), Polyetherketon (PEK), Polyethersulfon (PES), Isocyant, Polyol, Silikonharz oder deren Mischungen. Als Bindemittel wird Polyamidimid (PAI) eingesetzt

In einer bevorzugten Ausführungsform enthält das Bindemittel mindestens zwei der vorgenannten Bindemittel, wobei vorzugsweise mindestens eines dieser Bindemittel ausgewählt ist aus der Gruppe bestehend aus Epoxiden (EP), Isocyanaten, blockierten Isocyanaten und Carbodiimiden.

Als besonders geeignet haben sich organische Polymere mit einer Molmasse (Mw) von mindestens 5.000 g/mol bis 100.000 g/mol erwiesen.

Das Bindemittel kann auch anorganische Bindemittel enthalten, beispielsweise Wasserglas, Titanate, Phosphate.

In einer weiteren bevorzugten Ausführungsform der Erfindung weist die Festschmierstoffschicht das Bindemittel in einer Menge von 20 bis 90 Gew.%, noch bevorzugter von 40 bis 90 Gew.%, insbesondere 50 bis 80 Gew.%, auf, jeweils bezogen auf Gesamtgewicht der trockenen Festschmierstoffschicht.

In einer weiteren bevorzugten Ausführungsform der Erfindung weist die Festschmierstoffschicht den Festschmierstoff in einer Menge von 10 bis 80 Gew.%, noch bevorzugter von 10 bis 60 Gew.%, insbesondere 20 bis 50 Gew.%, auf, jeweils bezogen auf Gesamtgewicht der trockenen Festschmierstoffschicht.

Unter "trockener Festschmierstoffschicht" ist zu verstehen, dass die Schicht keine Lösemittel enthält, wie Wasser, aromatische Lösungsmittel, z.B. Xylol, Ethyl- bzw. Butylactate; Alkohole, wie Ethanol, Butanol; Ketone, wie Methylethylketon (MEK), Methylisobutylketon (MIBK); Pyrrolidone wie, Methyl-2-pyrrolidon (NMP), N-Ethyl-2-pyrrolidon (NEP), N-Butyl-2-pyrrolidon (NBP); Morpholine, wie N-Acetyl- oder N-Formylmorpholidon (NFM); Amide, wie Dimethylformamid (DMF), N,N-Dimethylacetamid (DMAc) oder Propionamid (CAS 53185-52-7). Unter dem Begriff "kein Lösemittel" ist dabei zu verstehen, dass Lösemittel höchstens in Spuren, d.h. in Anteilen unter 5 Gew.%, vorzugsweise unter 4 Gew.% bezogen auf das Gewicht der Festschmierstoffschicht enthalten sind.

Erfindungsgemäß enthält die Festschmierstoffschicht einen Festschmierstoff. Bevorzugte Festschmierstoffe sind ausgewählt aus der Gruppe bestehend aus Polytetrafluorethylen (PTFE), Molybdändisulfid, Graphit, Graphen, Bornitrid (hexagonal), Zinn(IV)-Sulfid, Zink(II)-Sulfid, Wolframdisulfid, Metallsulfid, Calciumphosphat, Silikat und Schichtsilikat, Talk, Glimmer und Gemischen hiervon.

Der Festschmierstoff weist bevorzugt eine Partikelgrößenverteilung mit einem d50 Wert von 0,3 nm bis 50 µm, noch bevorzugter 1 nm bis 20 µm, insbesondere 10 nm bis 20 µm auf.

Zur Bestimmung der Teilchengröße wird in Abhängigkeit von der Partikelgröße
- Laserbeugung gemäß ISO 13320:2009-10 (> 100 nm) oder
- dynamische Lichtstreuung gemäß ISO 22412:2017 (publication date 2017-02) (1 nm bis 100 nm) oder
- TEM (Metrologia. 2013 Nov; 50(6): 663-678, Particle size distributions by transmission electron microscopy: an interlaboratory comparison case study, Stephen B Rice, Christopher Chan, Scott C Brown, Peter Eschbach, Li Han, David S Ensor, Aleksandr B Stefaniak, John Bonevich, András E Vladár, Angela R Hight Walker, Jiwen Zheng, Catherine Starnes, Arnold Stromberg, Jia Ye, and Eric A Grulke) (< 1 nm) verwendet.

Die Schmierstoffschicht kann des Weiteren Zuschlagsstoffe enthalten, vorzugsweise ausgewählt aus der Gruppe bestehend aus Netzmitteln, Dispergieradditiven, Entschäumern, Entlüftern, Verlaufsmitteln, Anti-Absetzmitteln, Verschleißschutzmitteln, Pigmenten, Farbstoffen, Füller, und/oder Gemischen hiervon.

Ebenfalls können nach Bedarf rheologische Zuschlagsstoffe und AntiAbsetzmittel eingesetzt werden. Die Netzmittel werden beispielsweise zur Substrat- und Pigmentbenetzung verwendet. Die Netzmittel werden vorzugsweise ausgewählt aus der Gruppe bestehend aus anionischen Tensiden, z.B. mit Carboxylat- oder Sulfonat-Gruppen, kationischen Tensiden, z.B. mit quarternären Ammonium-Gruppen, nichtionischen Tensiden, z.B. mit Alkohol- oder Ethergruppen oder deren Kombinationen, amphotheren (zwitterionischen) Tensiden, z.B. mit quarternären Ammonium-Gruppen und Carboxylaten. Des Weiteren bevorzugt werden als Netzmittel (modifizierte) Polysiloxane und (Block- Co-)Polymere mit pigmentaffinen Gruppen und Gemische hiervon verwendet.

Als Füller eignen sich vorzugsweise Silikate und Phosphate, Ruß, sowie Metalloxide.

Bevorzugte Zuschlagsstoffe, Füller sowie Pigmente sind, z.B. in Lackformulierung und Lackrezeptur, Bodo Müller/Ulrich Poth, Vincentz Verlag, 2. Auflage, 2005 oder Lehrbuch der Lacktechnologie, Brock/Groteklaes/Mischke, Vincentz Verlag, 3. Auflage, 2009 genannt. Als Verschleißschutzzuschlagsstoffe können Metallsalzphosphate oder -Silikate sowie deren Mischungen eingesetzt werden. Es eignen sich auch Metalloxide, beispielsweise Eisenoxide in verschiedenen Oxidationsstufen, Titandioxid und deren Mischoxide, Aluminiumsilikate, sowie Mischoxide. Es können auch Mischungen verschiedener Verschleißschutzzuschlagsstoffe verwendet werden. Ebenfalls können Nanopartikel bzw. nanoskalige Partikel, die bis in einen Größenbereich von mehreren µm gehen können, als Verschleißschutz eingesetzt werden.

Als Verschleißschutzzuschlagsstoffe eignen sich auch Hartkeramiken wie (Aluminium-) Korund, Bornitrid (kubisch), Titancarbid, Siliziumcarbid, Siliziumnitrid, Titanborid (TiB2), Zirkonnitrid (ZrN), Aluminiumnitrid (AIN) und Titannitrid (TiN).

Als mögliche Farbgeber eignen sich neben einigen zum Teil unter Verschleißschutzzuschlagsstoffen genannten Substanzen alle möglichen (Färb-) Pigmente sowie Farbstoffe.

Allgemein sind die Zuschlagsstoffe sowohl an das Bindemittel als auch an die im Schmiermittel verwendeten Substanzen, sowie an den zu beschichtenden Untergrund anzupassen.

Die bindemittelhaltige Festschmierstoffschicht kann durch bekannte Methoden auf den Grundkörper aufgebracht werden, beispielsweise durch Sprühen, Tauchen, Zentrifugieren, Trommeln oder Drucken. Bevorzugt werden dazu die Ausgangsstoffe zur Herstellung der Festschmierstoffschicht in Form einer Lösungsmittel enthaltenden Dispersion appliziert.

Das Lösungsmittel wird vorzugsweise ausgewählt aus der Gruppe bestehend aus Wasser, organischen Lösungsmitteln, wie aromatischen Lösungsmitteln, z.B. Xylol, Ethyl- bzw. Butylactaten; Alkoholen, wie Ethanol, Butanol; Ketonen, wie Methylethylketon (MEK), Methylisobutylketon (MIBK); Pyrrolidonen wie Methyl-2-pyrrolidon (NMP), N-Ethyl-2-pyrrolidon (NEP), N-Butyl-2-pyrrolidon (NBP); Morpholinen, wie N-Acetyl- oder N-Formylmorpholidon (NFM); Amiden, wie Dimethylformamid (DMF), N,N-Dimethylacetamid (DMAc) oder Propionamid (CAS 53185-52-7).

Nach der Applikation wird die Lösemittel enthaltende Dispersion vorzugsweise einem physikalischen und/oder chemischen Aushärtungsprozess und/oder Trocknungsprozess unterworfen.

Vorzugsweise beträgt die Dicke der Festschmierstoffschicht nicht mehr als 70 µm, beispielsweise 1 µm bis 70 µm, vorzugsweise 10 µm bis 40 nm. Gemessen wird die Schichtdicke mikroskopisch über Schliffpräparation quer zur bindemittelhaltigen Festschmierstoffschicht gemäß DIN EN ISO 2808 (von 2019). Das magnetinduktive Verfahren wird bei magnetisierbaren, ferromagnetischen Grundkörpern verwendet. Bei nicht magnetisierbaren Grundkörpern wird nach der Methode 5.4.4.2, Variante Querschnitt gemessen.

Erfindungsgemäß liegen die bindemittelhaltige Festschmierstoffschicht und die Schmiermittelschicht als separate Schichten auf dem Grundkörper vor. Dies ist beispielsweise dadurch erzielbar, dass die bindemittelhaltige Festschmierstoffschicht und die Schmiermittelschicht nacheinander auf den Grundkörper aufgebracht werden, wobei vorzugsweise zuerst die bindemittelhaltige Festschmierstoffschicht und anschließend die Schmiermittelschicht aufgebracht wird. Hieran ist vorteilhaft, dass sich eine stabile kohärente und dichte bindemittelhaltige Festschmierstoffschicht auf dem Grundkörper ausbilden kann. Daher kann ein Wandern dieser Festschmierstoffschicht aufgrund von thermischen (Marangoni Effekt) oder mechanischen Einflüssen (Abschleudern aufgrund von Zentrifugalkräften) aus dem tribologischen System vermieden werden.

Das erfindungsgemäße tribologische System enthält einen Grundkörper. Dieser kann sowohl metallische als auch nichtmetallische Werkstoffe enthalten, insbesondere Kompositmaterialien, Aluminium, Aluminiumlegierungen, Stahl-, Edelstahl- und Gusswerkstoffe, Buntmetalle, Kunststoffe, faserverstärkte Kunststoffe und/oder Polymere. Bevorzugt enthält der Grundkörper als Werkstoff Aluminium, Aluminiumlegierungen, Stahl und/oder Edelstahl.

Der Grundkörper kann üblichen Vorbehandlungen wie Sandstrahlen, Phosphatieren, Einglätten, Aufrauhen unterworfen werden, um beispielsweise die Haftung der bindemittelhaltigen Festschmierstoffschicht und die Korrosionsbeständigkeit des beschichteten Grundkörpers zu verbessern.

Darüber hinaus enthält das erfindungsgemäße tribologische System typischerweise einen Gegenkörper, der sich relativ zum Grundkörper bewegen kann. Vorzugsweise enthält der Gegenkörper Kompositmaterialien, Aluminium, Aluminiumlegierungen, Stahl-, Edelstahl- und Gusswerkstoffe, Buntmetalle, Kunststoffe, faserverstärkte Kunststoffe, Polymere und/oder deren Gemische. Besonders bevorzugte Polymere sind Polyoxymethylen (POM) und/oder Polyamide. Ferner ist denkbar, dass der Gegenkörper ebenfalls mit einer bindemittelhaltigen Festschmierstoffschicht versehen ist. Bevorzugt enthält der Gegenkörper als Werkstoff Kunststoffe, Polymere und/oder deren Gemische. Durch die Auswahl dieser Werkstoffe kann Gewicht eingespart und Kosten reduziert werden.

In einer weiteren bevorzugten Ausführungsform der Erfindung ist der Grundkörper ausgewählt aus Stahl und/oder Edelstahl und der Gegenkörper ausgewählt aus POM und/oder Polyamiden. Diese Kombinationen haben sich, insbesondere für Bauteile im Automobilbereich, als besonders zweckmäßig erwiesen, da sie eine besonders gute Eigenschaftskombination hinsichtlich Kosten, Funktionalität und Gewicht darstellen.

Erfindungsgemäß umfasst die Schmiermittelschicht ein Schmiermittel. Vorzugsweise beträgt der Anteil des Schmiermittels an der Schmiermittelschicht mehr als 95 Gew.%, bevorzugt 100 Gew.%, Dieses Schmiermittel kann als Schmieröl, Schmierfett und wässriger Schmierstoff sowie deren Mischungen ausgebildet sein und enthält vorzugsweise ein Basisöl und/oder Wasser. Der Anteil des Basisöls im Schmiermittel liegt vorzugsweise über 50 Gew.%., beispielsweise 50 bis 90 Gew.%, bezogen auf das Gesamtgewicht des Schmiermittels. Wird ein wässriger Schmierstoff verwendet, so liegt der Anteil des Wassers vorzugsweise bei über 20 Gew.%, beispielsweise bei 20 bis 90 Gew.%, vorzugsweise bei 30 bis 90 Gew.%, bezogen auf das Gesamtgewicht des Schmiermittels.

Das Schmiermittel kann auf die verschiedensten dem Fachmann bekannten Arten und Weisen appliziert werden. Bevorzugte Applikationsmethoden von Schmierölen sind die Aufbringung in verdünnter oder unverdünnter Form. In verdünnter Form werden die Schmieröle vorzugsweise als Spray oder als Lösung in Kohlenwasserstoff Lösemittel aufgebracht. Bevorzugte Applikationsmethoden von Schmierfetten sind die Aufbringung in verdünnter oder unverdünnter Form. In verdünnter Form werden die Schmierfette vorzugsweise als Spray oder als Dispersion in Kohlenwasserstoff Lösemittel aufgebracht.

Schmieröle und/oder Schmierfette enthalten vorzugsweise synthetische Öle, mineralische und/oder native Öle als Basisöl, insbesondere synthetische Öle und/oder mineralische Öle. Diese Öle können einzeln oder in Kombination in Abhängigkeit von der Verwendung angewendet werden.

Synthetische Öle umfassen insbesondere Ester einer aliphatischen oder aromatischen Di-, Tri- oder Tetracarbonsäure mit einem oder mehreren in Mischung vorliegenden C₇- bis C₂₂-Alkoholen, weiterhin Ester von Trimethylolpropan, Pentaerythrit oder Dipentaerythrit mit aliphatischen C₇- bis C₂₂- Carbonsäuren, C₁₈-Dimersäureester mit C₇- bis C₂₂-Alkoholen, sowie Komplexester. Unter einem Komplexester wird erfindungsgemäß ein Polyester verstanden, der durch Reaktion von Polyolen mit Dicarbonsäuren, sowie gegebenenfalls Monocarbonsäuren hergestellt wird. Auch Poly-α-Olefine (PAO) oder Metallocen-katalysierte PAOs, alkylierte Naphthaline, alkylierte Benzole, Polyglykole, Silikonöle, Perfluorpolyether, sowie Polyphenylether oder alkylierte Di- oder Triphenylether sind erfindungsgemäß verwendbare synthetische Öle.

Die mineralischen Öle werden bevorzugt ausgewählt aus paraffinbasischen, naphthenbasischen und aromatischen Hydrocrackölen sowie Gas to Liquid (GTL)-Flüssigkeiten. GTL beschreibt ein Verfahren zur Herstellung von flüssigen Kohlenwasserstoffen aus Erdgas. Bevorzugte native Öle sind Triglyceride aus tierischer/pflanzlicher Quelle, die nach bekannten Verfahren wie beispielsweise Hydrogenierung veredelt wurden. Die besonders bevorzugten Triglyceridöle sind Triglyceridöle mit hohem Ölsäureanteil. Typische hierin verwendete Pflanzenöle mit hohem Ölsäuregehalt sind Safloröl, Maisöl, Rapsöl, Sonnenblumenöl, Sojabohnenöl, Leinsamenöl, Erdnußöl, Lesquerella-Öl, Meadowfoam-Öl und Palmenöl. Die genannten Triglyceride können als Glycerinderivate im Sinne einer wie vorangehend beschriebenen Ausführungsform der Erfindung angesehen werden.

Besonders bevorzugte Schmieröle enthalten als Basisöl: Polyglykole, Perfluorpolyether und Ester, die Di-, Tri- oder Tetracarbonsäure enthalten, mit einem oder mehreren in Mischung vorliegenden C₇- bis C₂₂-Alkoholen, weiterhin Ester von Trimethylolpropan, Pentaerythrit oder Dipentaerythrit mit aliphatischen C₇- bis C₂₂- Carbonsäuren, C₁₈-Dimersäureester mit C₇- bis C₂₂-Alkoholen, sowie Komplexester. Auch bevorzugt sind Poly-α-Olefine (PAO) oder Metallocen-katalysierte PAOs. Insbesondere bevorzugte Schmieröle enthalten als Basisöl: Poly-α-Olefine (PAO) oder Metallocen-katalysierte PAOs.

Wässrige Schmierstoffe stellen vorzugsweise transparente Flüssigkeiten dar - sind also keine Öl-in-Wasser oder Wasser-in Öl-Emulsionen. Wässrige Schmierstoffe enthalten zum Einstellen der Viskosität vorzugsweise Polyacrylate, Polymethacrylate, Polyamide, Polyvinylpyrrolidone, Cellulosederivate, z.B. Reaktionsprodukte aus Cellulose und Sulfonsäure oder alkylierte Cellulosen, oder Zuckerderivate, wie z.B. Reaktionsprodukte aus Zucker und Carbonsäuren. Besonders bevorzugt enthalten die wässrigen Schmierstoffe Polyalkylenglykol vorzugsweise mit einer Molmasse von 200 bis 35000 g/mol. Die monomeren Einheiten der Polyalkylenglykole können ausgewählt sein aus Ethylenoxid- und/oder Propylenoxid, die als Blockpolymer oder als statistisch verteilte Polymere vorliegen. Bevorzugt sind Polyalkylenglycole, die hergestellt werden mit Startern, ausgewählt aus Wasser, mono- di- und trifunktionalen Alkoholen, die bis zu 40 Kohlenstoffatome enthalten. Weiter bevorzugt enthalten die wässrigen Schmierstoffe Carbonsäureester mit Kettenlängen von C₄- bis C₄₀-Polyoxyethylen- und/oder Polyoxypropyleneinheiten.

Darüber hinaus enthält das Schmiermittel vorzugsweise übliche Additive gegen Korrosion, wie Metallsalze, Carbonsäuren, Ester, stickstoffhaltige Verbindungen und heterocyclische Verbindungen. Gegen Oxidation werden vorzugsweise Radikalfänger verwendet wie aromatische Amine oder substituierte Phenole. Zum Schutz gegen Metalleinflüsse werden bevorzugt Chelat- bildende Verbindungen verwendet. Als Verschleißschutzmittel auf Metalloberflächen werden bevorzugt phosphor- und schwefelhaltige Verbindungen, z.B. Zinkdialkyldithiophosphat, verwendet. Zur Reibwertsenkung kommen bevorzugt Polyimide, Polytetrafluorethylen (PTFE), Graphit, Metalloxide, Bornitrid, Molybdändisulfid und Phosphate zum Einsatz. Als Viskositätsverbesserer werden bevorzugt Polyisobutylen oder Polymethacrylate verwendet. Es können auch Ionische Flüssigkeiten eingesetzt werden, beispielsweise zur Erhöhung der elektrischen Leitfähigkeit des Schmiermittels oder zur Erhöhung der Lebensdauer des Schmiermittels.

Wird ein Schmierfett als Schmiermittel verwendet, so enthält dieses vorzugsweise ein Verdickungsmittel. Wie oben erwähnt, kann die erfindungsgemäß im Schmiermittel enthaltene Lithiumseife selbst als Verdicker fungieren. Vorzugsweise liegt die Lithiumseife dafür in Gewichtsanteilen am Gesamtgewicht des Schmiermittels von mehr als 5 Gew.% vor. Ebenfalls denkbar ist aber die Verwendung von Verdickungsmitteln, die keine Lithiumseifen enthalten, vorzugsweise ausgewählt aus Harnstoff, Aluminiumkomplexseifen, Metall-Einfachseifen der Elemente der 1. und 2. Hauptgruppe des Periodensystems, Metall-Komplexseifen der Elemente der 1. und 2. Hauptgruppe des Periodensystems ausgenommen der Lithiumseifen, Bentonit, Sulfonat, Silikat, Polyimid oder PTFE sowie einer Mischung der vorgenannten Verdickungsmittel. Im Falle von Harnstoff ist gemeint ein Reaktionsprodukt aus einem Diisocyanat, vorzugsweise 2,4-Diisocyanatotoluol, 2,6-Diisocyanatotoluol, 4,4'-Diisocyanatodiphenylmethan, 2,4'-Diisocyantodiphenylmethan, 4,4'-Diisocyanatodiphenyl, 4,4'-Diisocyanato-3,3'-dimethyldiphenyl, 4,4'-Diisocyanato-3,3'-dimethylphenylmethan, die einzeln oder in Kombination verwendet werden können, mit einem Amin und/oder Diamin der allgemeinen Formel (H₂N)ₓR, wobei x = 1 oder 2 ist, und R ein Aryl-, Alkyl- oder Alkylenrest mit 2 bis 22 Kohlenstoffatomen, die einzeln oder in Kombination vorhanden sind. Der Gewichtsanteil der Verdickungsmittel im Schmiermittel, die keine Lithiumseifen enthalten, beträgt vorzugsweise 2 bis 50 Gew.%, insbesondere 4 bis 40 Gew.%.

In einer bevorzugten Ausführungsform der Erfindung ist das tribologische System ausgebildet als ein tribologisches System, das unter inkonstanten hydrodynamischen Bedingungen betrieben wird, besonders bevorzugt als Wälzund Gleitlager, Getriebe, Kette, Gleitführung und Gelenk, insbesondere als Radlager von Kraftfahrzeugen, als Lager in Windkraftanlagen und/oder als Lager mit einem hohen Gleitanteil, wie als rotierendes Gleitlager, beispielsweise als Lüfterlager, oder als linear geführtes Gleitlager, beispielsweise in Strickmaschinen, als Axialzylinderrollenlager, beispielsweise in Verstell- und Einstellvorrichtungen für schwere Lasten im Maschinenbau und/oder als Rotorlagerung von Windkraftanlagen oder als Kleingetriebe, in metallischer und/oder nicht-metallischer Ausführung und/oder als Kugelgelenk, besonders als Kugelgelenk zum Einsatz im Automobilbereich.

Ein weiterer Gegenstand der vorliegenden Erfindung ist ein Verfahren zur Herstellung eines tribologischen Systems, umfassend folgende Schritte:
1. Bereitstellen eines Grundkörpers;
2. Aufbringen einer bindemittelhaltigen Festschmierstoffschicht, umfassend einen Festschmierstoff auf den Grundkörper;
3. Aufbringen einer Schmiermittelschicht umfassend ein Schmiermittel auf den mit dem bindemittelhaltigen Festschmierstoff versehenen Grundkörper, derart dass die bindemittelhaltige Festschmierstoffschicht und die Schmiermittelschicht als separate Schichten auf dem Grundkörper vorliegen, wobei das Schmiermittel Lithiumseife enthält.

Für die Merkmale des erfindungsgemäßen Verfahrens und insbesondere seine bevorzugten Ausführungsformen gilt das für das erfindungsgemäße tribologische System gesagte entsprechend.

Ein weiterer Gegenstand der vorliegenden Erfindung ist die Verwendung einer Sandwichschmierung umfassend
- eine bindemittelhaltige Festschmierstoffschicht umfassend einen Festschmierstoff und
- eine Schmiermittelschicht umfassend ein Schmiermittel, wobei die bindemittelhaltige Festschmierstoffschicht und die Schmiermittelschicht als separate Schichten auf dem Grundkörper vorliegen, wobei das Schmiermittel Lithiumseife enthält,
zum Schmieren von tribologischen Systemen, die metallische und/oder nicht-metallische Werkstoffe aufweisen, wie Wälz- und Gleitlagern, Getrieben, Ketten, Gleitführungen und Gelenken, insbesondere von Radlagern von Kraftfahrzeugen, von Lagern in Windkraftanlagen und/oder von Lagern mit einem hohen Gleitanteil, wie von rotierenden Gleitlagern, beispielsweise von Lüfterlagern oder von linear geführten Gleitlagern, beispielsweise in Strickmaschinen, von Axialzylinderrollenlagern, beispielsweise in Verstell- und Einstellvorrichtungen für schwere Lasten im Maschinenbau und/oder von Rotorlagerungen in Windkraftanlagen oder von Kleingetrieben, in metallischer und/oder nicht-metallischer Ausführung und/oder von Kugelgelenken, besonders von Kugelgelenken zum Einsatz im Automobilbereich.

In einer bevorzugten Ausführungsform weisen die tribologischen Systeme Oberflächen auf, die metallische und/oder nichtmetallische Werkstoffe, vorzugsweise Kompositmaterialien, Aluminium, Aluminiumlegierungen, Stahl-, Edelstahl- und Gusswerkstoffe, Buntmetalle, Kunststoffe, faserverstärkte Kunststoffe und/oder Polymere enthalten.

Für die Merkmale der erfindungsgemäßen Verwendung und insbesondere seine bevorzugten Ausführungsformen gilt das für das erfindungsgemäße tribologische System gesagte entsprechend.

Ein weiterer Gegenstand der vorliegenden Erfindung ist eine Sandwichschmierung umfassend
- eine bindemittelhaltige Festschmierstoffschicht umfassend einen Festschmierstoff und
- eine Schmiermittelschicht umfassend ein Schmiermittel, wobei die bindemittelhaltige Festschmierstoffschicht und die Schmiermittelschicht als separate Schichten auf dem Grundkörper vorliegen und wobei das Schmiermittel Lithiumseife enthält.

Für die Merkmale der erfindungsgemäßen Sandwichschmierung und insbesondere seine bevorzugten Ausführungsformen gilt das für das erfindungsgemäße tribologische System gesagte entsprechend.

Kurzbeschreibung der Figuren
- Figur 1:: Ergebnisse der tribologischen Prüfung von SMA, SMB, TBA, TBB und BFA bei 25°C und einer Geschwindigkeit von 0 m/s bis 3,3 m/s bei einer Flächenpressung von 48 MPa mit dem Gegenkörper POM
- Figur 2:: Ergebnisse der tribologischen Prüfung von SMA, SMB, TBA, TBB und BFA bei -20°C und einer Geschwindigkeit von 0 m/s bis 3,3 m/s bei einer Flächenpressung von 48 MPa mit dem Gegenkörper POM
- Figur 3:: Abhängigkeit der Reibwerte für TBA und SMA von der Gleitgeschwindigkeit bei der tribologischen Prüfung bei 25°C und einer Geschwindigkeit von 0 m/s bis 3,3 m/s bei einer Flächenpressung von 48 MPa mit dem Gegenkörper POM
- Figur 4:: Ergebnis der tribologischen Prüfung von SMC, TBC und BFA bei 25°C und einer Geschwindigkeit von 0 bis 0,1 m/s bei einer Flächenpressung von 48 MPa mit dem Gegenkörper POM
- Figur 5: Ergebnis der tribologischen Prüfung von SMC, TBC und BFA bei - 20°C und einer Geschwindigkeit von 0 bis 0,1 m/s bei einer Flächenpressung von 48 MPa mit dem Gegenkörper POM

Die Erfindung wird durch nachfolgende, nicht beschränkende Beispiele erläutert.

### 1. Herstellung mehrerer erfindungsgemäßer Sandwichschmierungen und tribologischer Systeme

### 1.1 Herstellung einer bindemittelhaltigen Festschmierstoffschicht

Zur Herstellung der erfindungsgemäßen Sandwichschmierungen wird zunächst die lösemittelhaltige Vorstufe der bindemittelhaltigen Festschmierstoffschicht BFA hergestellt:
Lösemittelhaltige Vorstufe der bindemittelhaltigen Festschmiersto:
20 Gew.-% Bindemittel (PAI)
1 Gew.-% Co-Bindemittel (EP),
8 Gew.-% Festschmierstoff (PTFE)
0,1 Gew.-% Additive und
aufgefüllt auf 100 Gew.-% mit Lösungsmittel (NMP)

### 1.2 Herstellung mehrerer Schmiermittel

Anschließend werden die Schmiermittel SMA, SMB, SMC, SMD mit den nachfolgend beschriebenen Zusammensetzungen hergestellt. Dabei dienen die Lithiumseife enthaltenden Schmiermittel SMA, SMC und SMD zur Herstellung des erfindungsgemäßen Tribosystems. Das Schmiermittel SMB zur Herstellung eines Vergleichstribosystem.

Schmiermittel SMA (Lithiumseifen-haltig):
85 Gew.-% synthetisches Grundöl (PAO 4)
10 Gew.-% Lithium-12-hydroxystearat
4 Gew.-% Additive (aminischer Antioxidant, Korrosionsschutzmittel, Verschleißschutz)
1 Gew % Glycerinmono-12-hydroxystearat

Schmiermittel SMB (Lithiumseifen-frei):
71 Gew.-% synthetisches Grundöl (PAO Hauptkomponente, Rest Dicarbonsäureester)
4 Gew.-% Al-Seife (Verdickerkomponente)
2 Gew.-% Bentonit (Verdickerkomponente)
23 Gew.-% Additive (Antioxidant, Korrosionsschutzmittel, Verschleißschutzmittel, Festschmierstoffe)

Schmiermittel SMC (Lithiumseifen-haltig)
50 Gew.-% Synthetitsches Grundöl (PAO 400)
20 Gew.-% Li-Stearat
30 Gew.-% Additive (Hauptkomponente Viskositätsindex-Verbesserer, Rest Antioxidant, Korrosionsschutzmittel, Verschleißschutzmittel)

Schmiermittel SMD (Lithiumseifen-haltig)
88 Gew.-% Synthetitsches Grundöl (PAO Gemisch, Grundölviskosität bei 40°C 40 mm ²/s)
10 Gew.-% Li-12-Hydroxystearat
2 Gew.-% Additive (aminischer Antioxidant, Korrosionsschutzmittel)

### 1.3 Herstellung mehrerer tribologischer Systeme mit bindemittelhaltiger Festschmierstoffschicht und Schmiermittel

Die lösemittelhaltige Vorstufe der bindemittelhaltigen Festschmierstoffschicht BFA wird auf einen kantenfreien Grundkörper aus 100Cr6 als Dispersion aufgebracht, getrocknet bei 80°C für 30 min und bei 220°C eingebrannt für 30 min. Die Schichtdicke der resultierenden lösemittelfreien Festschmierstoffschicht BFA in ausgehärtetem Zustand liegt bei 20µm.

Anschließend wird jeweils einer der so beschichteten Grundkörper mit den Schmiermitteln SMA, SMB, SMD und SMD befettet. Auf jede Kontaktstelle werden 50 mg Schmiermittel aufgebracht und somit die tribologischen Systeme TBA, TBB, TBC und TBD erhalten.

### 1.4 Abprüfen der tribologischen Systeme im Geschwindigkeitsbereich 0 m/s bis 3,3 m/s

Um kritische Schmierungsbedingungen, wie sie in realen technischen Anwendungen bei geringen bis hohen Geschwindigkeiten auftreten, überprüfen zu können, wird folgende tribologische Prüfmethode verwendet:
Es werden die bindemittelhaltige Festschmierstoffschicht BFA, die Schmiermittel SMA, SMB, SMC, SMD und die tribologischen Systeme TBA, TBB, TBC und TBD diesem speziellen tribologischen Test unterzogen. Dabei wird der gleiche Grundkörper, wie unter 1.3 beschrieben, verwendet. Zuerst wird die Vorstufe der bindemittelhaltigen Festschmierstoffschicht aufgebracht und dann die bindemittelhaltige Festschmierstoffschicht wie oben beschrieben hergestellt.Anschließend wird das Schmiermittel aufgebracht. Zur Simulation eines Tribokontaktes, wie er auch in einem Kunststoffkleingetriebe (Stahl Schnecke zu Kunststoffrad) auftritt, wird ein Tribometer, welches mit gleichförmiger, kontinuierlich ansteigender Geschwindigkeit rotiert, verwendet. Als Gegenkörpermaterial wird POM verwendet. Die Geschwindigkeit steigt linear an von 0 m/s bis 3,3 m/s bei einer Flächenpressung von 48 MPa. Der Gleitanteil beträgt bei jeder Geschwindigkeit 100%. Die Prüfung erfolgt jeweils bei -20°C und bei 25°C mit jeweils 3 Prüfläufen, wobei jeweils der Reibwert aufgenommen wird. Nach dem jeweils 3. Prüflauf wird am Gegenkörper das Verschleißvolumen der Verschleißmarke mit Hilfe eines Weißlicht Interferometers (Typ Bruker GT K1) gemessen.

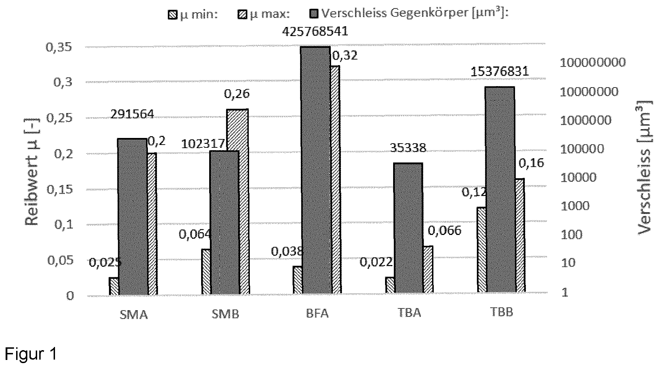

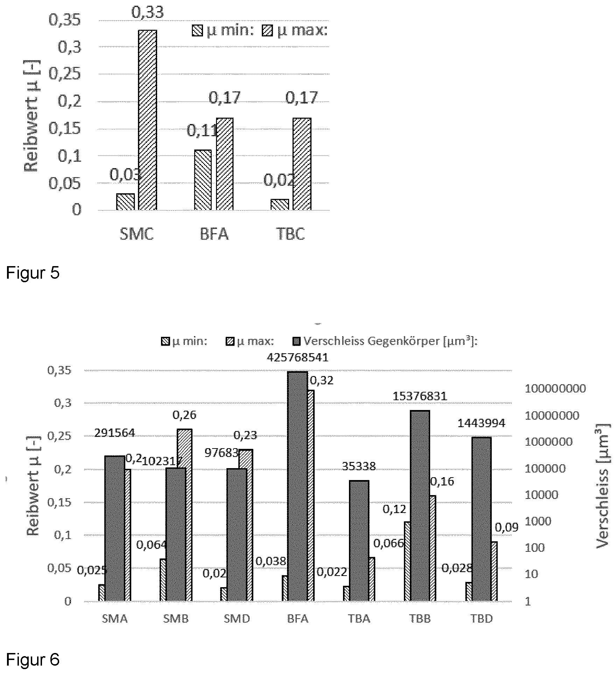

Die Ergebnisse der Prüfungen bei 25°C sind in Figur 1 und Figur 6dargestellt. Das erfindungsgemäße Tribosystem TBA zeigt überraschend niedrigere Reibungs- und Verschleißwerte über den mittleren bis hohen Geschwindigkeitsbereich (0,001 bis 3,3 m/s) als die jeweiligen Einzelkomponenten SMA, SMB, SMD und BFA. Das nicht erfindungsgemäße Lithiumseifen-freie Tribosystem TBB zeigt diesen Effekt nicht. TBD zeigt niedrigere Reibwerte ersichtlich an µ max als die Einzelkomponenten SMA, SMB, SMD und BFA und einen niedrigeren Verschleiß als das nicht erfindungsgemäße TBB.

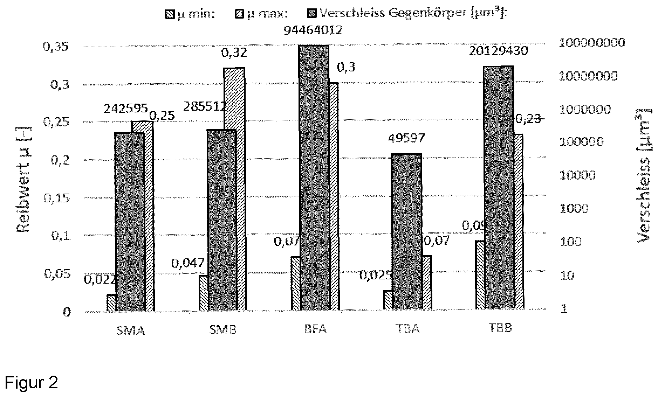

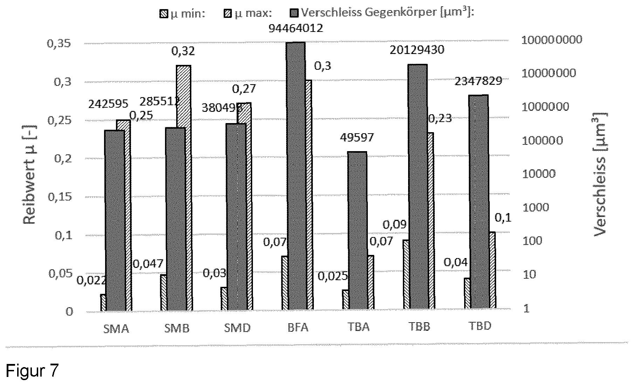

Die Ergebnisse der Prüfungen bei -20°C sind in Figur 2 und Figur 7 dargestellt. Das erfindungsgemäße Tribosystem TBA zeigt überraschend niedrigere Reibungs- und Verschleißwerte über den mittleren bis hohen Geschwindigkeitsbereich (0,001 bis 3,3 m/s) als die jeweiligen Einzelkomponenten SMA, SMB, SMD und BFA. Das nicht erfindungsgemäße Lithiumseifen-freie Tribosystem TBB zeigt diesen Effekt nicht.

TBD zeigt niedrigere Reibwerte ersichtlich an µ max als die Einzelkomponenten SMA, SMB, SMD und BFA und einen niedrigeren Verschleiß als das nicht erfindungsgemäße TBB.

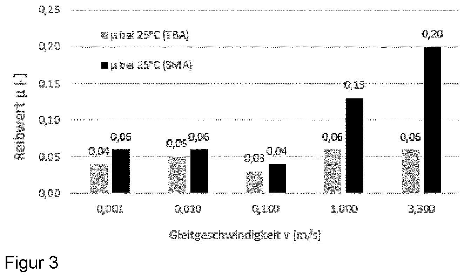

Weiterhin wurde gefunden, dass beim erfindungsgemäßen TBA im Vergleich zu den nichterfindungsgemäßen Vergleichsbeispielen SMA, SMB, BFA und TBB, insbesondere bei hohen Geschwindigkeiten, der Reibwert nicht stark ansteigt und auf einem nahezu konstant niedrigen Reibwert verbleibt. Dieser Effekt ist für SMA in Figur 3 bei einer Prüftemperatur von 25°C dargestellt.

TBA zeigt bezüglich Reibungs- und Verschleißverhalten bei 25°C und - 20°C besseres Verhalten als TBD. Es wird vermutet, dass diese Verbesserung auf das in SMA enthaltenen Glycerinmono-12-hydroxystearat zurückzuführen ist.

### 1.5 Abprüfen der tribologischen Systeme mit Geschwindigkeitsbereich

### von 0 m/s bis 0,1 m/s

Es wurde die gleiche Prüfmethode wie unter 1.4 verwendet, mit Ausnahme der maximalen Geschwindigkeit. Die angesetzte maximale Geschwindigkeit lag hier nur bei 0,1 m/s. Bei dieser Prüfung trat für keine Paarung ein messbarer Verschleiß auf.

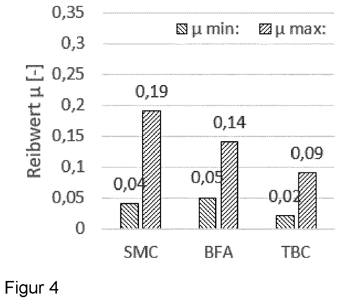

Figur 4 zeigt, dass das erfindungsgemäße TBC bei 25°C niedrigere Reibwerte zeigt als die Vergleichsbeispiele SMC und BFA.

Figur 5 zeigt, dass das erfindungsgemäße TBC bei -20°C niedrigere Reibwerte zeigt als die Vergleichsbeispiele SMC und BFA

## Patentansprüche

1. Tribologisches System, umfassend einen Grundkörper sowie eine Sandwichschmierung, wobei die Sandwichschmierung
- eine bindemittelhaltige Festschmierstoffschicht umfassend einen Festschmierstoff aufweist sowie
- eine Schmiermittelschicht umfassend ein Schmiermittel,
wobei die bindemittelfhaltige Festschmierstoffschicht und die Schmiermittelschicht als separate Schichten auf dem Grundkörper vorliegen, wobei das Schmiermittel Lithiumseife enthält, **dadurch gekennzeichnet, dass** das Bindemittel Polyamidimid (PAI) enthält.

2. Tribologisches System nach Anspruch 1, **dadurch gekennzeichnet, dass** die Lithiumseife ein Reaktionsprodukt aus Lithiumhydroxid mit organischen C₆ bis C₂₄ Mono- oder Dicarbonsäuren oder C₆ bis C₂₄ Mono- oder Dicarbonsäureestern und/oder mit deren Gemischen ist.

3. Tribologisches System nach Anspruch 1 oder 2, **dadurch gekennzeichnet, dass** die Lithiumseife ausgewählt ist aus Lithiumstearat, Lithium-12-hydroxystearat, Lithiumbehenat, Lithiummyristat, Lithiumpalmitat, Lithiumoleat, Lithiumlinoleat, Dilithiumsebacat, Dilithiumazelat, Dilithiumadipat und deren Gemischen.

4. Tribologisches System nach einem oder mehreren der vorangehenden Ansprüche, **dadurch gekennzeichnet, dass** der Gewichtsanteil an Lithiumseife 0,1 Gew.% bis 30 Gew.%, noch bevorzugter 5 bis 30 Gew.% und insbesondere 5 bis 25 Gew.%, bezogen auf das Gesamtgewicht des Schmiermittels, beträgt.

5. Tribologisches System nach einem oder mehreren der vorangehenden Ansprüche, **dadurch gekennzeichnet, dass** die Festschmierstoffschicht unmittelbar auf dem Grundkörper angeordnet ist und die Schmiermittelschicht auf der dem Grundkörper abgewandten Seite der Festschmierstoffschicht angeordnet ist.

6. Tribologisches System nach einem oder mehreren der vorangehenden Ansprüche, **dadurch gekennzeichnet, dass** das Schmiermittel Glycerin und/oder Glycerinderivate, nämlich Mono-, Di- oder Triester aus Glycerin mit C₁₂ bis C₂₄ Carbonsäuren, vorzugsweise C₁₂ bis C₂₄ Monocarbonsäuren enthält.

7. Tribologisches System nach einem oder mehreren der vorangehenden Ansprüche, **dadurch gekennzeichnet, dass** der Anteil des Glycerins und/oder des Glycerinderivats für Mono- oder Diester aus Glycerin mit C₁₂ bis C₂₄ Carbonsäuren im Bereich von 0,01 bis 5 Gew.% liegt und/oder für Triester aus Glycerin mit C₁₂ bis C₂₄ Carbonsäuren 0,01 bis 90 Gew.%, jeweils bezogen auf das Gesamtgewicht des Schmiermittels.

8. Tribologisches System nach einem oder mehreren der vorangehenden Ansprüche, **dadurch gekennzeichnet, dass** der Festschmierstoff ausgewählt ist aus der Gruppe bestehend aus Polytetrafluorethylen (PTFE), Molybdändisulfid, Graphit, Graphen, Bornitrid (hexagonal), Zinn(IV)-Sulfid, Zink(II)-Sulfid, Wolframdisulfid, Metallsulfid, Calciumphosphat, Silikat und Schichtsilikat, Talk, Glimmer und Gemischen hiervon.

9. Tribologisches System nach einem oder mehreren der vorangehenden Ansprüche, **dadurch gekennzeichnet, dass** der Festschmierstoff eine Partikelgrößenverteilung, wie in der Beschreibung definiert, mit einem d50 Wert von 0,3 nm bis 50 µm, noch bevorzugter 1 nm bis 20 µm, insbesondere 10 nm bis 20 µm aufweist.

10. Tribologisches System nach einem oder mehreren der vorangehenden Ansprüche, **dadurch gekennzeichnet, dass** das erfindungsgemäße tribologische System einen Gegenkörper aufweist, der sich relativ zum Grundkörper bewegen kann.

11. Tribologisches System nach Anspruch 10, **dadurch gekennzeichnet, dass** Grundköper und Gegenkörper unabhängig voneinander Oberflächen aufweisen, die metallische und/oder nichtmetallische Werkstoffe, vorzugsweise Kompositmaterialien, Aluminium, Aluminiumlegierungen, Stahl-, Edelstahl- und Gusswerkstoffe, Buntmetalle, Kunststoffe, faserverstärkte Kunststoffe und/oder Polymere enthalten

12. Verwendung eines tribologischen Systems nach einem oder mehreren der vorangehenden Ansprüche als ein tribologisches System, das unter inkonstanten hydrodynamischen Bedingungen betrieben wird, besonders bevorzugt als Wälz- und Gleitlager, Getriebe, Kette, Gleitführung und Gelenk, insbesondere als Radlager von Kraftfahrzeugen, als Lager in Windkraftanlagen und/oder als Lager mit einem hohen Gleitanteil, nämlich als rotierendes Gleitlager, beispielsweise als Lüfterlager, oder als linear geführtes Gleitlager, beispielsweise in Strickmaschinen, als Axialzylinderrollenlager, und/oder als Rotorlagerung von Windkraftanlagen, in metallischer und/oder nicht-metallischer Ausführung und/oder als Kugelgelenk, besonders als Kugelgelenk zum Einsatz im Automobilbereich.

13. Verfahren zur Herstellung eines tribologischen Systems nach Anspruch 1-11, umfassend folgende Schritte:
- Bereitstellen eines Grundkörpers,
- Aufbringen einer bindemittelhaltigen Festschmierstoffschicht, umfassend einen Festschmierstoff auf den Grundkörper,
- Aufbringen einer Schmiermittelschicht umfassend ein Schmiermittel auf den mit dem bindemittelhaltigen Festschmierstoff versehenen Grundkörper derart, dass die bindemittelhaltige Festschmierstoffschicht und die Schmiermittelschicht als separate Schichten auf dem Grundkörper vorliegen, wobei das Schmiermittel Lithiumseife enthält, **dadurch gekennzeichnet, dass** das Bindemittel Polyamidimid (PAI) enthält.

14. Verwendung einer Sandwichschmierung umfassend
- eine bindemittelhaltige Festschmierstoffschicht umfassend einen Festschmierstoff und
- eine Schmiermittelschicht umfassend ein Schmiermittel, wobei die bindemittelhaltige Festschmierstoffschicht und die Schmiermittelschicht als separate Schichten auf dem Grundkörper vorliegen,
zum Schmieren von tribologischen Systemen, die metallische und/oder nicht-metallische Werkstoffe aufweisen, wie Wälz- und Gleitlagern, Getrieben, Ketten, Gleitführungen und Gelenken, insbesondere von Radlagern von Kraftfahrzeugen, von Lagern in Windkraftanlagen und/oder von Lagern mit einem hohen Gleitanteil, nämlich von rotierenden Gleitlagern, beispielsweise von Lüfterlagern, oder von linear geführten Gleitlagern, beispielsweise in Strickmaschinen, von Axialzylinderrollenlagern, und/oder von Rotorlagerungen in Windkraftanlagen, in metallischer und/oder nicht-metallischer Ausführung und/oder von Kugelgelenken, besonders von Kugelgelenken zum Einsatz im Automobilbereich, wobei das Schmiermittel Lithiumseife enthält, **dadurch gekennzeichnet, dass** das Bindemittel Polyamidimid (PAI) enthält.

15. Sandwichschmierung umfassend
- eine bindemittelhaltige Festschmierstoffschicht umfassend einen Festschmierstoff und
- eine Schmiermittelschicht umfassend ein Schmiermittel, wobei die bindemittelhaltige Festschmierstoffschicht und die Schmiermittelschicht als separate Schichten auf dem Grundkörper vorliegen, wobei das Schmiermittel Lithiumseife enthält,
**dadurch gekennzeichnet, dass** das Bindemittel Polyamidimid (PAI) enthält.

## Claims

1. Tribological system comprising a main body and a sandwich lubrication, wherein the sandwich lubrication has
- a binder-containing solid-state lubricant layer comprising a solid-state lubricant and
- a lubricating agent layer comprising a lubricating agent,
wherein the binder-containing solid-state lubricant layer and the lubricating agent layer exist as separate layers on the main body, wherein the lubricating agent comprises lithium soap, **characterized in that** the binder comprises polyamideimide (PAI).

2. Tribological system according to Claim 1, **characterized in that** the lithium soap is a reaction product of lithium hydroxide with organic C₆ to C₂₄ mono- or dicarboxylic acids or C₆ to C₂₄ mono- or dicarboxylic esters and/or with mixtures thereof.

3. Tribological system according to Claim 1 or 2, **characterized in that** the lithium soap is selected from lithium stearate, lithium 12-hydroxystearate, lithium behenate, lithium myristate, lithium palmitate, lithium oleate, lithium linoleate, dilithium sebacate, dilithium azelate, dilithium adipate and mixtures thereof.

4. Tribological system according to one or more of the preceding claims, **characterized in that** the proportion by weight of lithium soap is 0.1% by weight to 30% by weight, more preferably 5% to 30% by weight and especially 5% to 25% by weight, based on the total weight of the lubricating agent.

5. Tribological system according to one or more of the preceding claims, **characterized in that** the solid-state lubricant layer is disposed directly on the main body, and the lubricating agent layer is disposed on the side of the solid-state lubricant layer remote from the main body.

6. Tribological system according to one or more of the preceding claims, **characterized in that** the lubricating agent comprises glycerol and glycerol derivatives, namely mono-, di- or triesters of glycerol with C₁₂ to C₂₄ carboxylic acids, preferably C₁₂ to C₂₄ monocarboxylic acids.

7. Tribological system according to one or more of the preceding claims, **characterized in that** the proportion of glycerol and/or of the glycerol derivative for mono- or diesters of glycerol with C₁₂ to C₂₄ carboxylic acids is in the range from 0.01% to 5% by weight, and/or for triesters of glycerol with C₁₂ to C₂₄ carboxylic acids is 0.01% to 90% by weight, based in each case on the total weight of the lubricating agent.

8. Tribological system according to one or more of the preceding claims, **characterized in that** the solid-state lubricant is selected from the group consisting of polytetrafluoroethylene (PTFE), molybdenum disulfide, graphite, graphene, boron nitride (hexagonal), tin(IV) sulfide, zinc(II) sulfide, tungsten disulfide, metal sulfide, calcium phosphate, silicate and sheet silicate, talc, mica and mixtures thereof.

9. Tribological system according to one or more of the preceding claims, **characterized in that** the solid-state lubricant has a particle size distribution, as defined in the description, with a d50 of 0.3 nm to 50 µm, more preferably 1 nm to 20 µm, especially 10 nm to 20 µm.

10. Tribological system according to one or more of the preceding claims, **characterized in that** the tribological system according to the invention has a counterpart body that can move relative to the main body.

11. Tribological system according to Claim 10, **characterized in that** main body and counterpart body independently have surfaces comprising metallic and/or nonmetallic materials, preferably composite materials, aluminium, aluminium alloys, steel materials, stainless steel materials and cast materials, nonferrous metals, plastics, fibre-reinforced plastics and/or polymers.

12. Use of a tribological system according to one or more of the preceding claims as a tribological system which is operated under non-constant hydrodynamic conditions, more preferably as ball bearing and slide bearing, transmission, chain, guided slide bearing and joint, especially as a wheel bearing of motor vehicles, as a bearing in wind turbines and/or as a bearing with a high sliding component, namely as a rotating slide bearing, for example as a fan bearing, or as a linear-guided slide bearing, for example in knitting machines, as axial cylinder roller bearing, and/or as rotor bearing of wind turbines, in a metallic and/or nonmetallic design, and/or as a ball joint, particularly as a ball joint for use in the automotive sector.

13. Process for producing a tribological system according to Claims 1-11, comprising the following steps:
- providing a main body,
- applying a binder-containing solid-state lubricant layer comprising a solid-state lubricant to the main body,
- applying a lubricating agent layer comprising a lubricating agent to the main body provided with the binder-containing solid-state lubricant in such a way that the binder-containing solid-state lubricant layer and the lubricating agent layer exist as separate layers on the main body, wherein the lubricating agent comprises lithium soap, **characterized in that** the binder comprises polyamideimide (PAI).

14. Use of a sandwich lubrication comprising
- a binder-containing solid-state lubricant layer comprising a solid-state lubricant and
- a lubricating agent layer comprising a lubricating agent, wherein the binder-containing solid-state lubricant layer and the lubricating agent layer exist as separate layers on the main body,
for lubrication of tribological systems including metallic and/or nonmetallic materials, such as ball bearings and slide bearings, transmissions, chains, guided slide bearings and joints, especially of wheel bearings of motor vehicles, of bearings in wind turbines and/or of bearings with a high sliding component, namely of rotating slide bearings, for example of fan bearings, or of linear-guided slide bearings, for example in knitting machines, of axial cylinder roller bearings, and/or of rotor bearings in wind turbines, in a metallic and/or nonmetallic design, and/or of ball joints, particularly of ball joints for use in the automotive sector, wherein the lubricating agent comprises lithium soap, **characterized in that** the binder comprises polyamideimide (PAI).

15. Sandwich lubrication comprising
- a binder-containing solid-state lubricant layer comprising a solid-state lubricant and
- a lubricating agent layer comprising a lubricating agent, wherein the binder-containing solid-state lubricant layer and the lubricating agent layer exist as separate layers on the main body, wherein the lubricating agent comprises lithium soap,
**characterized in that** the binder comprises polyamideimide (PAI).

## Revendications

1. Système tribologique, comprenant un corps de base ainsi qu'une lubrification en sandwich, la lubrification en sandwich présentant
- une couche de lubrifiant solide, contenant un liant, comprenant un lubrifiant solide ainsi que
- une couche d'agent lubrifiant comprenant un agent lubrifiant,
la couche de lubrifiant solide contenant un liant et la couche d'agent lubrifiant étant présentes en tant que couches distinctes sur le corps de base, l'agent lubrifiant contenant un savon de lithium, **caractérisé en ce que** le liant contient un polyamidimide (PAI).

2. Système tribologique selon la revendication 1, **caractérisé en ce que** le savon de lithium est un produit de réaction d'hydroxyde de lithium avec des acides monocarboxyliques ou dicarboxyliques organiques en C₆ à C₂₄ ou des esters d'acides monocarboxyliques ou dicarboxyliques organiques en C₆ à C₂₄ et/ou avec leurs mélanges.

3. Système tribologique selon la revendication 1 ou 2, **caractérisés en ce que** le savon de lithium est choisi parmi le stéarate de lithium, le 12-hydroxystéarate de lithium, le béhénate de lithium, le myristate de lithium, le palmitate de lithium, l'oléate de lithium, le linoléate de lithium, le sébaçate de di-lithium, l'azélate de di-lithium, l'adipate de di-lithium et leurs mélanges.

4. Système tribologique selon l'une ou plusieurs des revendications précédentes, **caractérisé en ce que** la proportion en poids de savon de lithium est de 0,1 % en poids à 30 % en poids, plus préférablement de 5 à 30 % en poids et en particulier de 5 à 25 % en poids, par rapport au poids total de l'agent lubrifiant.

5. Système tribologique selon l'une ou plusieurs des revendications précédentes, **caractérisé en ce que** la couche de lubrifiant solide est disposée directement sur le corps de base et la couche d'agent lubrifiant est disposée sur le côté opposé au corps de base de la couche de lubrifiant solide.

6. Système tribologique selon l'une ou plusieurs des revendications précédentes, **caractérisé en ce que** l'agent lubrifiant contient de la glycérine et/ou des dérivés de glycérine, à savoir des monoesters, des diesters ou des triesters de glycérine avec des acides carboxyliques en C₁₂ à C₂₄, de préférence des acides monocarboxyliques en C₁₂ à C₂₄.

7. Système tribologique selon l'une ou plusieurs des revendications précédentes, **caractérisé en ce que** la proportion de la glycérine et/ou du dérivé de glycérine pour des monoesters ou des diesters de glycérine avec des acides carboxyliques en C₁₂ à C₂₄ se situe dans la plage de 0,01 à 5 % en poids et/ou pour des triesters de glycérine avec des acides carboxyliques en C₁₂ à C₂₄ se situe dans la plage de 0,01 à 90 % en poids, à chaque fois par rapport au poids total de l'agent lubrifiant.

8. Système tribologique selon l'une ou plusieurs des revendications précédentes, **caractérisé en ce que** le lubrifiant solide est choisi dans le groupe constitué par un polytétrafluoroéthylène (PTFE), le disulfure de molybdène, le graphite, le graphène, le nitrure de bore (hexagonal), le sulfure d'étain(IV), le sulfure de zinc(II), le disulfure de tungstène, un sulfure de métal, le phosphate de calcium, un silicate et un silicate stratifié, le talc, le mica et des mélanges de ceux-ci.

9. Système tribologique selon l'une ou plusieurs des revendications précédentes, **caractérisé en ce que** le lubrifiant solide présente une distribution de taille de particules, comme définie dans la description, comportant une valeur de d50 de 0,3 nm à 50 µm, plus préférablement de 1 nm à 20 µm, en particulier de 10 nm à 20 µm.

10. Système tribologique selon l'une ou plusieurs des revendications précédentes, **caractérisé en ce que** le système tribologique de l'invention présente un contre-corps qui peut se déplacer par rapport au corps de base.

11. Système tribologique selon la revendication 10, **caractérisé en ce que** le corps de base et le contre-corps présentent indépendamment l'un de l'autre des surfaces qui contiennent des matériaux métalliques et/ou non métalliques, de préférence des matériaux composites, de l'aluminium, des alliages d'aluminium, des matériaux d'acier, d'acier inoxydable et de moulage, des métaux non ferreux, des matières plastiques, des matières plastiques renforcées par des fibres et/ou des polymères.

12. Utilisation d'un système tribologique selon l'une ou plusieurs des revendications précédentes en tant que système tribologique qui est exploité dans des conditions hydrauliques dynamiques non constantes, particulièrement préférablement en tant que paliers à rouleaux et paliers à glissement, entraînements, chaîne, glissière et charnière, en particulier en tant que palier de roue de véhicules à moteur, en tant que palier dans des éoliennes et/ou en tant que palier avec un taux de glissement élevé, à savoir en tant que palier à glissement rotatif, par exemple en tant que palier de ventilateur, ou en tant que palier à glissement guidé de manière linéaire, par exemple dans des machines à tricoter, en tant que palier à rouleaux à cylindre axial, et/ou en tant que palier de rotor d'éoliennes, dans une application métallique et/ou non métallique et/ou en tant que charnière à rotule, particulièrement en tant que charnière à rotule pour une utilisation dans le domaine automobile.

13. Procédé pour la préparation d'un système tribologique selon les revendications 1 à 11 comprenant les étapes suivantes :
- mise à disposition d'un corps de base,
- application d'une couche de lubrifiant solide, contenant un liant, comprenant un liant solide, sur le corps de base,
- application d'une couche d'agent lubrifiant comprenant un agent lubrifiant sur le corps de base pourvu du lubrifiant solide contenant un liant de sorte que la couche de lubrifiant solide contenant un liant et la couche d'agent lubrifiant soient présentes en tant que couches distinctes sur le corps de base, l'agent lubrifiant contenant un savon de lithium, **caractérisé en ce que** le liant contient un polyamidimide (PAI).

14. Utilisation d'une lubrification en sandwich comprenant
- une couche de lubrifiant solide, contenant un liant, comprenant un lubrifiant solide et
- une couche d'agent lubrifiant comprenant un agent lubrifiant, la couche de lubrifiant solide contenant un liant et la couche d'agent lubrifiant étant présentes en tant que couches distinctes sur le corps de base,
pour la lubrification de systèmes tribologiques, qui présentent des matériaux métalliques et/ou non métalliques, comme des paliers à rouleaux et des paliers à glissement, des entraînements, des chaînes, des glissières et des charnières, en particulier des paliers de roue de véhicules à moteur, des paliers dans des éoliennes et/ou des paliers avec un taux de glissement élevé, à savoir des paliers à glissement rotatif, par exemple des paliers de ventilateur, ou des glissements guidés de manière linéaire, par exemple des machines à tricoter, des paliers à rouleaux à cylindre axial, et/ou des paliers de rotor dans des éoliennes, dans une application métallique et/ou non métallique et/ou des charnières à rotule, particulièrement des charnières à rotule pour une utilisation dans le domaine automobile, l'agent lubrifiant contenant un savon de lithium, **caractérisé en ce que** le liant contient un polyamidimide (PAI).

15. Lubrification en sandwich comprenant
- une couche de lubrifiant solide, contenant un liant, comprenant un lubrifiant solide et
- une couche d'agent lubrifiant comprenant un agent lubrifiant, la couche de lubrifiant solide contenant un liant et la couche d'agent lubrifiant étant présentes en tant que couches distinctes sur le corps de base, l'agent lubrifiant contenant un savon de lithium,
**caractérisé en ce que** le liant contient un polyamidimide (PAI).
